# EUROPEAN PATENT SPECIFICATION

(11) **EP 4 517 849 B1**
(45) Date of publication and mention of the grant of the patent: **18.11.2026**
(21) Application number: 24219238.3
(22) Date of filing: 16.07.2018
(51) Int. Cl.: H01M 10/04, H01M 4/04, H01M 4/02

(54) **ELECTRODE ASSEMBLY AND SECONDARY BATTERY INCLUDING THE ELECTRODE ASSEMBLY**
ELEKTRODENANORDNUNG UND SEKUNDÄRBATTERIE MIT DER ELEKTRODENANORDNUNG
ENSEMBLE ÉLECTRODE ET BATTERIE SECONDAIRE COMPRENANT L'ENSEMBLE ÉLECTRODE

(30) Priority: 18.07.2017 KR 20170090977; 11.07.2018 KR 20180080734
(43) Date of publication of application: 05.03.2025
(62) Document number(s) of the earlier application(s) in accordance with Art. 76 EPC: 18834582.1 / 3 493 315
(73) Proprietor: LG Energy Solution, Ltd., Seoul 07335 (KR)
(72) Inventor: SHIN, Byung Heon, 34122 Daejeon (KR); LEE, Woo Yong, 34122 Daejeon (KR); PARK, Jong Hwa, 34122 Daejeon (KR)
(74) Representative: Plasseraud IP

(56) References cited:
- US-A1- 2015 118 533

## Description

### CROSS-REFERENCE TO RELATED APPLICATION

The present application claims the benefit of the priority of Korean Patent Application Nos. 10-2017-0090977, filed on July 18, 2017, and 10-2018-0080734, filed on July 11, 2018.

### TECHNICAL FIELD

The present invention relates to an electrode assembly, a secondary battery including the electrode assembly, and a method for manufacturing the electrode assembly, and more particularly, to an electrode assembly having a structure that is minimized in deformation due to a swelling phenomenon of the electrode assembly, a secondary battery including the electrode assembly, and a method for manufacturing the electrode assembly.

### BACKGROUND ART

Secondary batteries capable of being repeatedly chargeable and dischargeable may be provided in various types. In general, such a secondary battery includes an electrode assembly having a structure in which an electrode and a separator are alternately stacked.

The demand and type of electronic devices are increasing, and in particular, as the demand of electronic devices having an irregular shape, which deviates from the typical simple shape, increases, a secondary battery mounted on an electronic device having an irregular shape is also increasingly required to have an irregular shape.

The secondary battery having the irregular shape may have, for example, a curved surface. The secondary battery having the curved surface is often manufactured so as to form a certain radius of curvature.

The assembled secondary battery is subjected to a formation step of charging and discharging the secondary battery several times in order to form the secondary battery before the shipment. In the formation step, a swelling phenomenon in which the electrode assembly and the secondary battery are swollen to increase in volume of the secondary battery may occur generally.

As the swelling phenomenon occurs, the electrode assembly and the secondary battery may be deformed from an initially assembled form. Thus, there has been a problem that the secondary having an originally intended shape is not manufactured. Particularly, in case of a secondary battery having a curved surface having a constant curvature radius, an initial curvature radius and a curvature radius after the swelling are different from each other due to the swelling phenomenon to deteriorate assemblability and storage ability of the secondary battery with respect to electronic devices.

For example, in case of an electrode assembly having a curved surface as the assembled electrode assembly, the entire curvature radius of the curved surface after the swelling phenomenon occurs is greater than the entire curvature radius of the curved surface before the swelling phenomenon occurs (i.e., the curved surface formed on the electrode assembly is relatively flat due to the swelling phenomenon).

Particularly, deformation of the curved surface largely occurs at both ends of the curved surface. That is, even though the electrode assembly is assembled so that a central portion and each of both ends of the curved surface have the same curvature radius, the curvature radius at both ends of the curved surface may be greater than that at the central portion after the swelling (i.e., each of both ends of the electrode assembly is relatively more flat due to the swelling phenomenon).
US 2015/118533 A1 discloses a curved shape secondary battery.

### DISCLOSURE OF THE INVENTION

### TECHNICAL PROBLEM

Thus, an object to be solved by the present invention is to improve assemblability and storage ability of a secondary battery having a curved surface with respect to electronic devices by manufacturing an electrode assembly in consideration of deformation of the electrode assembly and the secondary battery due to a swelling phenomenon.

### TECHNICAL SOLUTION

According to an aspect of the present invention for achieving the above object, an electrode assembly having a curved surface is defined in the appended set of claims, the electrode assembly includes: a plurality of electrodes, each of which has a shape corresponding to that of the curved surface formed on the electrode assembly, wherein at least one electrode includes: a collector; and an electrode active material layer applied to each of first and second surfaces of the collector, wherein the first surface is disposed to face the inside of the curved surface with respect to the collector, the second surface is disposed to face the outside of the curved surface with respect to the collector, and a non-coating portion that is not coated with the electrode active material layer is disposed between the electrode active material layers applied to the first surface.

The non-coating portion is provided in plurality, the electrode active material applied to the first surface is divided to be spaced apart from each other by the non-coating portions to form a plurality of electrode active material layers on the first surface, and a length of the electrode active material layer, which is formed on one end or each of both ends of the first surface, of the plurality of electrode active material layers applied to the first surface may be 0.05 times to 0.3 times of the total length of the plurality of electrode active material layers.

The non-coating portion may be provided in two, the electrode active material applied to the first surface may be divided to be spaced apart from each other by the two non-coating portions to form three electrode active material layers on the first surface, and a length of the electrode active material layer, which is formed at a center of the first surface, of the three electrode active material layers applied to the first surface may be 0.4 times to 0.9 times of the total length of the three electrode active material layers.

### ADVANTAGEOUS EFFECTS

According to the present invention, the electrode assembly may be manufactured in consideration of the deformation of the electrode assembly and the secondary battery due to the swelling phenomenon to improve the assemblability and the storage ability of the secondary battery having the curved surface with respect to the electronic devices.

### BRIEF DESCRIPTION OF THE DRAWINGS

FIG. 1 is a side view illustrating a state of an electrode assembly before a swelling phenomenon occurs according to the present disclosure.
FIG. 2 is a side view illustrating a state of the electrode assembly after the swelling phenomenon according to the present disclosure.
FIG. 3 is a side view illustrating an electrode of an electrode assembly according to the present disclosure.
FIG. 4 is a side view illustrating an electrode of an electrode assembly according to an embodiment of the present invention.

### MODE FOR CARRYING OUT THE INVENTION

Hereinafter, an electrode and a method for manufacturing the electrode assembly according to the present invention will be described with reference to the accompanying drawings.

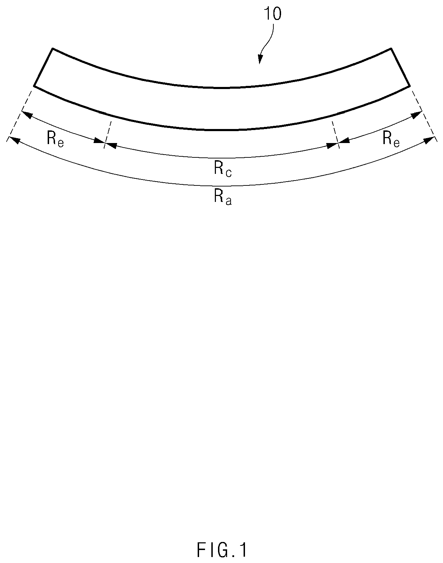

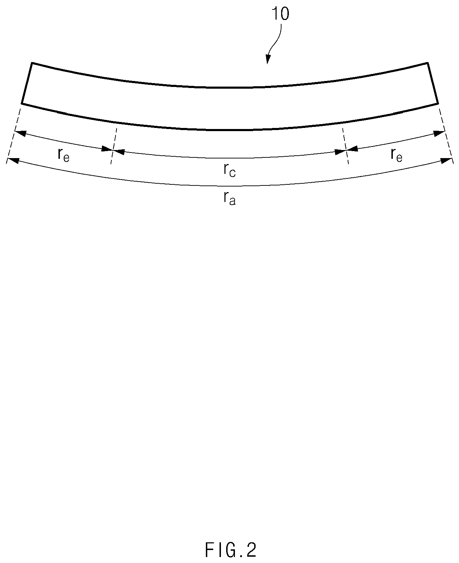

FIG. 1 is a side view illustrating a state of an electrode assembly before a swelling phenomenon occurs according to the present disclosure, and FIG. 2 is a side view illustrating a state of the electrode assembly after the swelling phenomenon according to the present disclosure.

An electrode assembly according to the present invention may have a structure in which a positive electrode, a separator, and a negative electrode are alternately disposed. Here, the positive electrode may include a positive electrode collector and a positive electrode active material layer formed on both surfaces of the positive electrode collector, and the negative electrode may include a negative electrode collector and a negative electrode active material layer formed on both surfaces of the negative electrode collector. The separator may be disposed between the positive electrode and the negative electrode.

Also, the electrode assembly according to the present invention may be an electrode assembly used for a polymer electrolyte secondary battery. Thus, the electrode assembly according to the present invention may further include a polymer electrolyte layer disposed between the positive electrode and the separator and between the negative electrode and the separator.

A polymer electrolyte forming the polymer electrolyte layer may be a polymer solid electrolyte. Alternatively, the polymer electrolyte may be a gel electrolyte in which a plasticizer is added to the polymer solid electrolyte.

As illustrated in FIGS. 1 and 2, a curved surface may be formed on the electrode assembly according to the present invention.

Here, the curved surface may have a predetermined curvature radius. That is, as illustrated in FIG. 1, the curved surface of the electrode assembly 10 before a swelling phenomenon occurs may have a mean curvature radius Rₐ on the entire curved surface.

As illustrated in FIG. 1, the curved surface of the electrode assembly 10 may be divided into a central portion and both ends. Thus, the central portion and each of both the ends of the curved surface may have curvature radii R_{c} and Rₑ, respectively. R_{c} and Rₑ may be equal to or different from each other. When R_{c} and Rₑ are equal to each other, R_{c}, Rₑ, and Rₐ may be equal to each other. Also, although all of the curvature radii of both ends of the curved surface have the curvature radius Rₑ in FIG. 1, this does not mean that the curvature radii of both the ends of the curved surface are necessarily the same. That is, the curvature radius of one end of the curved surface and the curvature radius of the other end of the curved surface may be different from each other according to process characteristics of the curved surface in a process of forming the curved surface.

In general, after the electrode assembly is manufactured, in order to realize formation of the secondary battery, a formation step of charging and discharging the secondary battery several times to allow the secondary battery to be in a usable state may be performed.

However, in the formation process, a swelling phenomenon in which the electrode assembly within the secondary battery increases in volume may occur. Since the electrode assembly increases in volume due to the swelling phenomenon, the electrode assembly may be changed in shape before and after the swelling phenomenon occurs. This leads to distortion in shape of the electrode assembly and the secondary battery.

When the swelling phenomenon occurs in the electrode assembly having a curved surface, a phenomenon in which an initial curvature radius of the electrode assembly varies may additionally occur. That is, as the swelling phenomenon occurs, a curvature radius of the curved surface of the electrode assembly after the swelling phenomenon occurs may become larger than that of the curved surface of the electrode assembly before the swelling phenomenon occurs. Particularly, as the swelling phenomenon occurs, the curved surface of the electrode assembly may be relatively flat. This may be understood that the curvature radius of the curved surface increases due to the swelling phenomenon.

Also, the flattening of the curved surface of the electrode assembly due to the swelling phenomenon may be relatively larger at both ends of the curved surface than at the central portion of the curved surface. This may be understood that a variation in curvature radius at each of both ends of the curved surface is larger than that in curvature radius at the central portion of the curved surface.

An object of the present invention is to solve the problem in which the initially intended characteristics (i.e., a curvature radius) of the curved surface of the electrode assembly are not achieved due to the swelling phenomenon.

Referring to FIGS. 1 and 2, a method for manufacturing the electrode assembly according to the present disclosure may include a forming step of forming an electrode assembly 10 having a curved surface and a charging/discharging step of charging and discharging the electrode assembly 10 several times. In the forming step, the curved surface may be formed so that a mean curvature radius Rₐ of the curved surface before the charging/discharging step is less than a mean curvature radius rₐ of the curved surface after the charging/discharging step. Here, rₐ may be a mean curvature radius, which is finally intended, of the electrode assembly.

According to the present disclosure, the curved surface of the electrode assembly before the swelling phenomenon occurs is formed to be relatively large in consideration of a phenomenon in which the curved surface of the electrode assembly is relatively flat by the swelling phenomenon. Thus, the curvature radius of the electrode assembly after the formation step may match the curvature radius of the electrode assembly, which is originally designed.

According to a modified example of the present disclosure, in the forming step, a curvature radius Rₑ at an end of the curved surface before the charging/discharging step may be less than a curvature radius R_{c} at the central portion of the curved surface before the charging/discharging step.

As described above, the curvature radius of the curved surface of the electrode assembly may increase by the swollen shape of the electrode assembly having the curved surface (e.g., the curved surface becomes relatively flat). The increase in curvature radius is relatively larger at both ends of the curved surface than at the central portion of the curved surface.

Thus, according to the modified example of the present disclosure, in the forming step of forming the curved surface of the electrode assembly, the curvature radius Rₑ may be formed to be smaller than the curvature radius R_{c} so that a difference between the curvature radii rₑ and r_{c} is smaller than a difference between the curvature radii Rₑ an R_{c} to manufacture the electrode assembly on which a curved surface having a constant curvature radius is formed.

Here, the curvature radius Rₑ may be formed to have a ratio within a predetermined range with respect to the curvature radius R_{c}. For example, the curvature radius Rₑ may be 0.95 times to 0.99 times of the curvature radius R_{c}. When the curvature radius Rₑ is less than 0.95 times of the curvature radius R_{c}, since the curvature radius rₑ is still less than the curvature radius r_{c} after the swelling phenomenon occurs, both the ends of the curved surface may be excessively curved. Also, when the curvature radius Rₑ exceeds 0.99 times of the curvature radius R_{c}, since the curvature radius is recessively larger than the curvature radius r_{c} after the swelling phenomenon occurs, both ends of the curved surface become excessively flat, and thus, the problem according to the related art may not be solved. More preferably, the curvature radius Rₑ may be 0.96 times to 0.98 times of the curvature radius R_{c}.

Also, the curvature radius Rₑ may be formed to have a difference within a predetermined range with to the curvature radius R_{c}. For example, the curvature radius Rₑ may be less 4 mm to 8 mm than the curvature radius R_{c}. When the curvature radius Rₑ is less than the curvature radius R_{c} by less than 4 mm, since the curvature radius is recessively larger than the curvature radius r_{c} after the swelling phenomenon occurs, both ends of the curved surface become excessively flat, and thus, the problem according to the related art may not be solved. Also, when the curvature radius Rₑ is less than the curvature radius R_{c} by more than 8 mm, since the curvature radius rₑ is still small than the curvature radius r_{c} after the swelling phenomenon occurs, both the ends of the curved surface may be excessively curved. More preferably, the curvature radius Rₑ may be less 5mm to 7 mm than the curvature radius R_{c}.

In the forming step according to the present disclosure, the top and bottom surfaces of the electrode assembly may be pressed together with each other by the upper pressing device and the lower pressing device. A surface of the upper pressing device, which presses the top surface of the electrode assembly, may have a concave surface or may be provided with only the concave surface. Also, a surface of the lower pressing device, which presses the bottom surface of the electrode assembly, may have a convex surface. Alternatively, the surface of the lower pressing device, which presses the bottom surface of the electrode assembly, may have a convex surface or may be provided with only the convex surface. On the other hand, the surface of the lower pressing device, which presses the bottom surface of the electrode assembly, may have a flat surface or may be provided with only the flat surface. Alternatively, the surface of the lower pressing device, which presses the bottom surface of the electrode assembly, may have all of the convex surface and the flat surface. For example, the flat surface may be disposed at a central portion of the surface of the lower pressing device, which presses the bottom surface of the electrode assembly, and the convex surface may be disposed at the peripheral portion of the surface of the lower pressing device.

Also, in the forming step, the electrode assembly may be pressed under conditions of a specific temperature, pressure, and time. In the forming step, the electrode assembly may be pressed at a temperature of 80 degrees to 90 degrees Celsius and a pressure of 784.532 kPa (8 kgf/cm²) to 1176.798 (12 kgf/cm²) for a time period of 4 minutes to 6 minutes. For example, in the forming step, the electrode assembly may be pressed under conditions of a temperature of 85 degree and a pressure of 980.665kPa (10 kgf/cm²) for a time period of 5 minutes.

The above-described contents with respect to the forming step, the upper pressing device and the lower pressing device may be equally applied to following embodiments of the present invention.

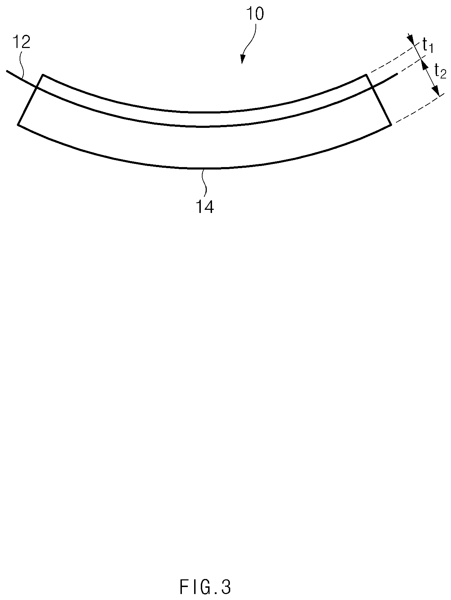

FIG. 3 is a side view illustrating an electrode of an electrode assembly according to the present disclosure.

Like the foregoing present disclosure, the present disclosure is also intended to solve the problem caused by a variation in curvature radius of the curved surface of the electrode assembly due to the swelling phenomenon.

Referring to FIG. 3, an electrode 11 constituting an electrode assembly may include a collector 12 and an electrode active material layer 14 applied to each of both surfaces of the collector 12.

Since a curved surface is formed on the electrode assembly according to the present invention, a curved surface having a shape corresponding to that of the curved surface of the electrode assembly may be formed on the electrode 11 constituting the electrode assembly. Thus, the electrode active material layer 14 may be applied to a first surface (i.e., a top surface of a collector 12 in FIG. 3) provided to face the inside of the curved surface formed on the electrode 11 with respect to the collector 12 and a second surface (i.e., a bottom surface of the collector 12 in FIG. 3) provided to face the outside of the curved surface formed on the electrode 11 with respect to the collector 12.

Here, the electrode active material layer applied to the first surface of the electrode 11 of the electrode assembly according to the present disclosure may have a thickness t₁ different from a thickness t₂ of the electrode active material layer applied to the second surface. For example, the thickness t₁ may be less than the thickness t₂.

According to the present disclosure, the electrode active material layer may be applied so that the thickness t₁ is less than the thickness t₂ to prevent the electrode from being flattened when a swelling phenomenon occurs.

That is, the more the thickness of the electrode active material layer applied to the first surface provided to face the inside of the curved surface formed on the electrode with respect to the collector increases, the more the electrode tends to expand again due to the thickness of the electrode active material layer applied to the first surface. This adversely affects the shape maintenance of the electrode assembly having the curved surface. Thus, according to the present disclosure, the electrode active material layer may be applied so that the thickness t₁ is less than the thickness t₂ to prevent the electrode from being flattened when a swelling phenomenon occurs.

In similar to the foregoing disclosure, the thickness t₁ may also have a ratio within a predetermined range with respect to the thickness t₂. For example, the thickness t₁ may be 0.7 times to 0.9 times of the thickness t₂. When the thickness t₁ is less than 0.7 times of the thickness t₂, the thickness of the electrode active material layer applied to the second surface may be excessively large, and thus, the electrode assembly may be more curved. On the other hand, when the thickness t₁ exceeds 0.9 times of the thickness t₂, the flattening of the electrode assembly may be effectively prevented.

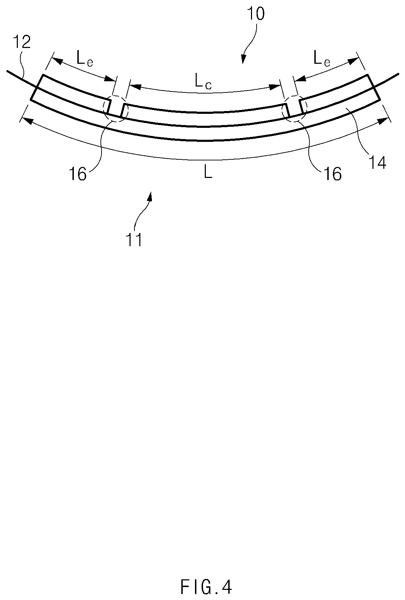

FIG. 4 is a side view illustrating an electrode of an electrode assembly according to an embodiment of the present invention.

Like the foregoing disclosure, the embodiment of the present invention is also intended to solve the problem caused by a variation in curvature radius of the curved surface of the electrode assembly due to the swelling phenomenon.

Referring to FIG. 4, an electrode 11 constituting the electrode assembly may include a collector 12 and an electrode active material layer 14 applied to each of both surfaces of the collector 12. Also, since the electrode 11 having a curved surface and first and second surfaces coated with the electrode active material layer are basically the same as those according to the example of the present disclosure and FIG. 3, their descriptions are derived from those according to the preceding example of the present invention.

A non-coating portion, which is not coated with the electrode active material layer, may be formed between the electrode active material layers on the electrode of the electrode assembly according to the embodiment of the present invention. As illustrated in FIG. 4, the non-coating portion 16 may be formed on the first surface.

According to the embodiment of the present invention, the non-coating portion may be formed on the first surface to form an empty space between the electrode active material layers applied to the first surface. The empty space between the electrode active material layers may prevent the electrode assembly from being flattened again. That is, when the electrode active material layer is also applied to the non-coating portion of the first surface, since a curved surface is formed on the electrode assembly, the electrode active material layer applied on the corresponding non-coating layer of the first surface may be pressed. In this case, the electrode active layer applied to the corresponding non-coating portion of the first surface may be expanded by restoring force. Thus, the electrode assembly may intend to be expanded again.

Thus, according to the embodiment of the present invention, since the non-coating portion is formed on the first surface to minimize the tendency of the electrode active material layer applied to the first surface to be expanded again by the restoring force, thereby maintaining the electrode assembly having the curved surface as it is.

Also, the non-coating portion 16 may be provided in plurality. FIG. 4 illustrates a case in which two non-coating portions 16 are formed. Also, the electrode active material layers applied to the first surface may be spaced apart from each other by the non-coating portion 16. Thus, a plurality of electrode active material layers may be formed on the first surface.

The electrode active material layer applied to the collector 12 may have a predetermined length L. Particularly, as described above, the non-coating portion 16 is formed on the first surface, and the plurality of electrode active material layers may be formed on the first surface by the non-coating portion 16. Thus, each of the plurality of active material layers formed on the first surface may have a length. In this specification, a length of the electrode active material layer, which is formed on the center of the first surface, of the plurality of active material layers formed on the first surface is called L_{c}, and a length of the electrode active material layer formed on each of both ends of the first surface is called Lₑ.

In the electrode 11 of the electrode assembly according to the embodiment of the present invention, the length (i.e., Lₑ) of the electrode active material layer, which is formed on one end or each of both ends of the first surface, of the plurality of electrode active material layers applied to the first surface may have a ratio within a predetermined range with respect to the total length (i.e., L) of the plurality of electrode active material layer applied to the first surface. For example, the length Lₑ may be 0.05 times to 0.3 times of the length L.

When the length Lₑ is less than 0.05 times of the length L, both ends of the electrode assembly may be excessively curved after the swelling phenomenon occurs. When the length Lₑ exceeds 0.05 times of the length L, both ends of the electrode assembly may be excessively flat after the swelling phenomenon occurs, and thus, it may be difficult to solve the problem according to the related art.

As described above, in the electrode 11 of the electrode assembly according to the embodiment of the present invention, the two non-coating portions 16 are formed on the first surface, and the electrode active material layers applied to the first surface may be spaced apart from each other by the two non-coating portions to form three electrode active material layers.

Here, in the electrode 11 of the electrode assembly according to the embodiment of the present invention, a length (i.e., L_{c}) of the electrode active material layer, which is formed at a center of the first surface, of the plurality of electrode active material layers applied to the first surface may have a ratio within a predetermined range with respect to the total length (i.e., L) of the plurality of electrode active material layer applied to the first surface. For example, the length L_{c} may be 0.4 times to 0.9 times of the length L.

When the length L_{c} is less than 0.4 times of the length L, both ends of the electrode assembly may be excessively flat after the swelling phenomenon occurs. When the length L_{c} exceeds 0.9 times of the length L, both ends of the electrode assembly may be excessively curved after the swelling phenomenon occurs, and thus, it may be difficult to solve the problem according to the related art.

The electrode assembly according to the present invention may be an electrode assembly inserted into a can or a pouch of a can type secondary battery or a pouch type secondary battery. That is, the present invention may be an invention related to the can type secondary battery or the pouch type secondary battery.

When the secondary battery according to the present invention is the pouch type secondary battery, the pouch accommodating the electrode assembly may have a multilayered structure respectively made of a plurality of materials. For example, the pouch may include an aluminum layer, and a polyolefin resin layer provided on the upper and lower portions of the aluminum layer, respectively. For example, polyolefin may be polypropylene.

### Example 1

After the electrode assembly is manufactured, an electrode assembly was pressed by a pressing presser to form a curved surface of each of top and bottom surfaces of the electrode assembly. In curvature radii of ends of the curved surface of the electrode assembly manufactured according to Example 1, a curvature radius Rₑ (left) of a left end was 195 mm, and a curvature radius Rₑ (right) of a right end was 195 mm. Also, a curvature radius R_{c} of a central portion was 200 mm.

### Example 2

An electrode assembly was manufactured in the same method as in Example 1, except that, in curvature radii of ends of a curved surface of the electrode assembly, a curvature radius Rₑ (left) of a left end was 194 mm, a curvature radius Rₑ (right) of a right end was 195 mm, and a curvature radius R_{c} of a central portion of the curved surface was 201 mm.

### Example 3

An electrode assembly was manufactured in the same method as in Example 1, except that, in curvature radii of ends of a curved surface of the electrode assembly, a curvature radius Rₑ (left) of a left end was 195 mm, a curvature radius Rₑ (right) of a right end was 196 mm, and a curvature radius R_{c} of a central portion of the curved surface was 200 mm.

### Comparative Example 1

An electrode assembly was manufactured in the same method as in Example 1, except that, in curvature radii of ends of a curved surface of the electrode assembly, a curvature radius Rₑ (left) of a left end was 188 mm, a curvature radius Rₑ (right) of a right end was 188 mm, and a curvature radius R_{c} of a central portion of the curved surface was 200 mm.

### Comparative Example 2

An electrode assembly was manufactured in the same method as in Example 1, except that, in curvature radii of ends of a curved surface of the electrode assembly, a curvature radius Rₑ (left) of a left end was 201 mm, a curvature radius Rₑ (right) of a right end was 201 mm, and a curvature radius R_{c} of a central portion of the curved surface was 197 mm.

### Experimental Example

Each of the electrode assemblies manufactured according to Examples and Comparative Examples was repeatedly changed and discharged to perform a formation process. The formation process was performed through charging and discharging 300 times at a temperature of 45°C. The charging of the formation process was performed under constant current of 1.0 C and a voltage of 4.4 V, and when the charging is completed, current was 122 mA. The discharging of the formation process was performed under constant current of 1.0 C, and when the discharging is completed, a voltage was 3.0 V.

After the formation process is completed, the curvature radius of the curved surface formed on the electrode assembly was measured. The curvature radius of the curved surface of the electrode assembly measured before and after the formation process was summarized in Table 1 below. In the curvature radius of the curved surface of the electrode assembly after the formation process, a curvature radius of a left end was expressed as rₑ (left), a curvature radius of a right end was expressed as rₑ (right), and a curvature radius of a central portion of the curved surface was expressed as r_{c}.

**[Table 1]**

| | Rₑ (left) | R_{c} | Rₑ (right) | rₑ (left) | r_{c} | rₑ (right) |
|---|---|---|---|---|---|---|
| Example 1 | 195mm | 200mm | 195mm | 210mm | 210mm | 208mm |
| Example 2 | 194mm | 201mm | 195mm | 209mm | 211mm | 208mm |
| Example 3 | 195mm | 200mm | 196mm | 209mm | 210mm | 211mm |
| Comparative Example 1 | 188mm | 200mm | 188mm | 202mm | 208mm | 203mm |
| Comparative Example 2 | 201mm | 197mm | 201mm | 212mm | 209mm | 214mm |

Referring to Table 1, when the electrode assembly is manufactured according to Example 1 to 3, it is seen that the curvature radius of the electrode assembly is uniformly formed over the entire area of the ends and the central portion of the curved surface. Particularly, in the case of the electrode assembly manufactured according to Examples, a difference between the curvature radii rₑ and r_{c} is up to 3 mm. On the other hands, in the case of the electrode assembly manufactured according to Comparative Examples, a difference between the curvature radii rₑ and r_{c} is up to 6 mm. Thus, it is seen that when the electrode assembly is manufactured according to Examples, a uniform curvature radius is formed over the entire curved surface of the electrode assembly.

While the embodiments of the present invention have been described with reference to the specific embodiments, it will be apparent to those skilled in the art that various changes and modifications may be made without departing from the scope of the invention as defined in the following claims.

## Claims

1. An electrode assembly having a curved surface, the electrode assembly comprising:
a plurality of electrodes, each of which has a shape corresponding to that of the curved surface formed on the electrode assembly,
wherein at least one electrode (11) comprises:
a collector (12); and
an electrode active material layer (14) applied to each of first and second surfaces of the collector,
wherein the first surface is disposed to face the inside of the curved surface with respect to the collector (12),
the second surface is disposed to face the outside of the curved surface with respect to the collector (12),
a non-coating portion (16) that is not coated with the electrode active material layer (14) is disposed between the electrode active material portions applied to the first surface,
wherein the non-coating portion (16) is provided in plurality, and
the electrode active material applied to the first surface is divided to be spaced apart from each other by the non-coating portions (16) to form a plurality of electrode active material portions on the first surface.

2. The electrode assembly of claim 1, wherein a length (Lₑ) of the electrode active material portions, which is formed on one end or each of both ends of the first surface, of the plurality of electrode active material portions applied to the first surface is 0.05 times to 0.3 times of the total length (L) of the plurality of electrode active material portions.

3. The electrode assembly of claim 1, wherein the non-coating portion is provided in two,
the electrode active material applied to the first surface is divided to be spaced apart from each other by the two non-coating portions to form three electrode active material portions on the first surface.

4. The electrode assembly of claim 3, wherein a length (L_{c}) of the electrode active material layer, which is formed at a center of the first surface, of the three electrode active material portions applied to the first surface is 0.4 times to 0.9 times of the total length (L) of the three electrode active material portions.

5. A secondary battery comprising:
the electrode assembly of claim 1; and
a pouch exterior accommodating the electrode assembly.

## Patentansprüche

1. Elektrodenanordnung mit einer gekrümmten Oberfläche, wobei die Elektrodenanordnung Folgendes umfasst:
• eine Vielzahl von Elektroden, von denen jede eine Form aufweist, die derjenigen der auf der Elektrodenanordnung ausgebildeten gekrümmten Oberfläche entspricht,
• wobei mindestens eine Elektrode (11) Folgendes umfasst:
• einen Kollektor (12); und
• eine Elektroden-Aktivmaterialschicht (14), die jeweils auf die erste und die zweite Oberfläche des Kollektors aufgebracht ist,
• wobei die erste Oberfläche so angeordnet ist, dass sie der Innenseite der gekrümmten Oberfläche in Bezug auf den Kollektor (12) zugewandt ist,
• die zweite Oberfläche so angeordnet ist, dass sie der Außenseite der gekrümmten Oberfläche in Bezug auf den Kollektor (12) zugewandt ist,
• ein unbeschichteter Abschnitt (16), der nicht mit der Elektroden-Aktivmaterialschicht (14) beschichtet ist, zwischen den auf die erste Oberfläche aufgebrachten Elektroden-Aktivmaterialabschnitten angeordnet ist,
• wobei der unbeschichtete Abschnitt (16) in einer Vielzahl vorgesehen ist, und
• das auf die erste Oberfläche aufgebrachte Elektroden-Aktivmaterial so unterteilt ist, dass es durch die unbeschichteten Abschnitte (16) voneinander beabstandet ist, um eine Vielzahl von Elektroden-Aktivmaterialabschnitten auf der ersten Oberfläche zu bilden.

2. Elektrodenanordnung nach Anspruch 1, wobei eine Länge (Lₑ) der Elektroden-Aktivmaterialabschnitte, die an einem Ende oder an jedem der beiden Enden der ersten Oberfläche ausgebildet sind, aus der Vielzahl von auf die erste Oberfläche aufgebrachten Elektroden-Aktivmaterialabschnitten das 0,05-Fache bis 0,3-Fache der Gesamtlänge (L) der Vielzahl von Elektroden-Aktivmaterialabschnitten beträgt.

3. Elektrodenanordnung nach Anspruch 1, wobei der unbeschichtete Abschnitt zweifach vorgesehen ist,
das auf die erste Oberfläche aufgebrachte Elektroden-Aktivmaterial so unterteilt ist, dass es durch die zwei unbeschichteten Abschnitte voneinander beabstandet ist, um drei Elektroden-Aktivmaterialabschnitte auf der ersten Oberfläche zu bilden.

4. Elektrodenanordnung nach Anspruch 3, wobei eine Länge (L_{c}) der Elektroden-Aktivmaterialschicht, die in einer Mitte der ersten Oberfläche ausgebildet ist, aus den drei auf die erste Oberfläche aufgebrachten Elektroden-Aktivmaterialabschnitten das 0,4-Fache bis 0,9-Fache der Gesamtlänge (L) der drei Elektroden-Aktivmaterialabschnitte beträgt.

5. Sekundärbatterie, umfassend:
• die Elektrodenanordnung nach Anspruch 1; und
• ein Pouch-Gehäuse, das die Elektrodenanordnung aufnimmt.

## Revendications

1. Ensemble électrode ayant une surface incurvée, l'ensemble électrode comprenant :
• une pluralité d'électrodes, dont chacune a une forme correspondant à celle de la surface incurvée formée sur l'ensemble électrode,
• dans lequel au moins une électrode (11) comprend :
• un collecteur (12) ; et
• une couche de matériau actif d'électrode (14) appliquée sur chacune des première et seconde surfaces du collecteur,
• dans lequel la première surface est disposée de façon à faire face à l'intérieur de la surface incurvée par rapport au collecteur (12),
• la seconde surface est disposée de façon à faire face à l'extérieur de la surface incurvée par rapport au collecteur (12),
• une partie non revêtue (16) qui n'est pas revêtue de la couche de matériau actif d'électrode (14) est disposée entre les portions de matériau actif d'électrode appliquées sur la première surface,
• dans lequel la partie non revêtue (16) est prévue en pluralité, et
• le matériau actif d'électrode appliqué sur la première surface est divisé pour être espacé l'un de l'autre par les parties non revêtues (16) afin de former une pluralité de portions de matériau actif d'électrode sur la première surface.

2. Ensemble électrode selon la revendication 1, dans lequel une longueur (Lₑ) des portions de matériau actif d'électrode, qui est formée sur une extrémité ou sur chacune des deux extrémités de la première surface, de la pluralité de portions de matériau actif d'électrode appliquées sur la première surface est de 0,05 fois à 0,3 fois la longueur totale (L) de la pluralité de portions de matériau actif d'électrode.

3. Ensemble électrode selon la revendication 1, dans lequel la partie non revêtue est prévue au nombre de deux,
le matériau actif d'électrode appliqué sur la première surface est divisé pour être espacé l'un de l'autre par les deux parties non revêtues afin de former trois portions de matériau actif d'électrode sur la première surface.

4. Ensemble électrode selon la revendication 3, dans lequel une longueur (L_{c}) de la couche de matériau actif d'électrode, qui est formée au centre de la première surface, des trois portions de matériau actif d'électrode appliquées sur la première surface est de 0,4 fois à 0,9 fois la longueur totale (L) des trois portions de matériau actif d'électrode.

5. Batterie secondaire comprenant :
• l'ensemble électrode selon la revendication 1 ; et
• un boîtier extérieur en forme de poche logeant l'ensemble électrode.
